# EUROPEAN PATENT APPLICATION

(11) **EP 4 835 967 A1**
(43) Date of publication of application: **04.11.2026**
(21) Application number: 25898952.4
(22) Date of filing: 26.11.2025
(51) Int. Cl.: H01M 4/04

(54) **ELECTRODE SHEET ROLLING METHOD**

(30) Priority: 27.11.2024 KR 20240172130
(71) Applicant: LG Energy Solution, Ltd., Seoul 07335 (KR)
(72) Inventor: PARK, Keum Yong, Daejeon 34122 (KR); LEE, Kihwa, Daejeon 34122 (KR); LEE, Bumhyuk, Daejeon 34122 (KR); JEON, Shin Wook, Daejeon 34122 (KR); KIM, Byeongjo, Daejeon 34122 (KR)
(74) Representative: Plasseraud IP
(86) International application number: PCT/KR2025/019817
(87) International publication number: WO 2026/117000

(57) **Abstract**

According to an embodiment of the present disclosure, provided is a method for rolling an electrode sheet, comprising a coating portion in which an electrode active material slurry is coated on one surface or both surfaces of a current collector and a non-coating portion in which an electrode active material slurry is not coated,
wherein the electrode sheet is primarily rolled by a pair of first rolling rolls,
wherein the primary pressed electrode sheet is secondarily rolled again by a pair of second rolling rolls, thereby performing tandem rolling, and
wherein the following condition 1 is satisfied when performing the tandem rolling:
[Condition 1]
Primary Rolling Ratio: 50% to 70%

## Description

### TECHNICAL FIELD

### Cross-Reference to Related Application(s)

This application claims priority to and the benefit of Korean Patent Application No. 10-2024-0172130, filed on November 27, 2024, the entire contents of which are incorporated herein by reference.

The present disclosure relates to a method for rolling an electrode sheet, and more particularly, to a tandem rolling method in which rolling conditions are set within a specific range.

### BACKGROUND

In modern society, as portable devices such as a mobile phone, a notebook computer, a camcorder and a digital camera as well as energy storage systems (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low self-discharge rate and high energy density.

The manufacturing process of such a lithium secondary battery is roughly classified into three steps: an electrode process, an assembly process, and a formation process. The electrode process may be again divided into an active material mixing process, an electrode coating process, a rolling process, a slitting process, a winding process, and the like.

Among them, the rolling process is a process of passing an electrode substrate between a pair of rolling rolls heated to high temperature and compressing it to a desired thickness, in order to reduce the thickness of the electrode substrate having finished the coating process to thereby increase capacity density, and to increase the adhesion between the electrode current collector and the electrode active material.

In this case, the rolling process is divided into single rolling, which performs rolling only once, and tandem rolling, which performs rolling twice. Recently, as the development of high-capacity batteries has been actively promoted, the tandem rolling process has become mainstream.

However, the tandem rolling has problems in that the drawing rate is higher than single rolling, and thus, the difference in drawing rate between a coating portion coated with an active material layer and a non-coating portion not formed with an active material layer increases, thereby increasing a tension burden received by the non-coating portion and increasing the risk of disconnection.

Therefore, there is a need to develop a rolling process technology that can improve this disconnection.

### DETAILED DESCRIPTION OF THE INVENTION

### Technical Problem

It is an object of the present disclosure to provide an electrode sheet rolling process that can improve disconnection during rolling.

However, the technical objects to be solved by embodiments of the present disclosure are not limited to the above-described objects, and can be variously expanded within the scope of the technical idea included in the present disclosure.

### Technical Solution

According to an aspect of the present disclosure, provided is a method for rolling an electrode sheet, comprising a coating portion in which an electrode active material slurry is coated on one surface or both surfaces of a current collector and a non-coating portion in which an electrode active material slurry is not coated,
wherein the electrode sheet is primarily rolled by a pair of first rolling rolls,
wherein the primary pressed electrode sheet is secondarily rolled again by a pair of second rolling rolls, thereby performing tandem rolling, and
wherein the following condition 1 is satisfied when performing the tandem rolling:
   [Condition 1]
   Primary Rolling Ratio: 50% to 70%
   Specifically, the primary rolling ratio of the condition 1 may be 60% to 65%.

In the method for rolling an electrode sheet, the outfeed tension measured after the secondary rolling may further satisfy the following condition 2:
[Condition 2]
Outfeed Tension: 150 N to 300 N
Specifically, the outfeed tension of the condition 2 may be 170N to 250N.

Moreover, the method for rolling an electrode sheet further comprises an induction heating process of heating the current collector prior to the primary rolling, wherein the induction heating process may satisfy the following condition 3:
[Condition 3]
Induction Heating Temperature: 150°C to 300°C
Specifically, the induction heating temperature of the condition 3 may be 200°C to 260°C.

Furthermore, surface temperatures of the first rolling roll and the second rolling roll may be respectively 25°C to 90°C.

Specifically, the surface temperatures of the first rolling roll and the second rolling roll may be respectively 70°C to 90°C.

In addition, the method for rolling an electrode sheet further comprises a primary non-coating portion rolling process in which only the non-coating portion is rolled after the primary rolling, and a secondary non-coating portion rolling process in which only the non-coating portion is rolled after the secondary rolling, and
the pressures of the primary and secondary non-coating portion rolling may be respectively 1 kPa to 500 kPa.

Specifically, the pressures of the primary and secondary non-coating portion rolling may be respectively 150 kPa to 400 kPa.

Further, the transport speed for rolling the electrode sheet may be 1 m/min to 120 m/min.

### BRIEF DESCRIPTION OF THE DRAWINGS

Figure 1 is a schematic diagram of a rolling apparatus used in an electrode sheet rolling process according to an embodiment of the present disclosure.
Figure 2 is a graph showing a disconnection frequency according to an experimental example of the present disclosure.

### DETAILED DESCRIPTION OF THE EMBODIMENTS

Hereinafter, with reference to the accompanying drawings, various embodiments of the present disclosure will be described in detail to the extent that one of ordinary skill in the art can easily practice the claimed invention. The present disclosure may be implemented in various different forms, and is not limited to the embodiments described herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and a region are shown to be exaggerated.

Further, when a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Further, throughout the specification, when a portion is referred to as "including" a certain component, it means that the portion can further include other components, without excluding the other components, unless otherwise stated.

Now, embodiments of the present disclosure will be described with reference to the accompanying drawings.

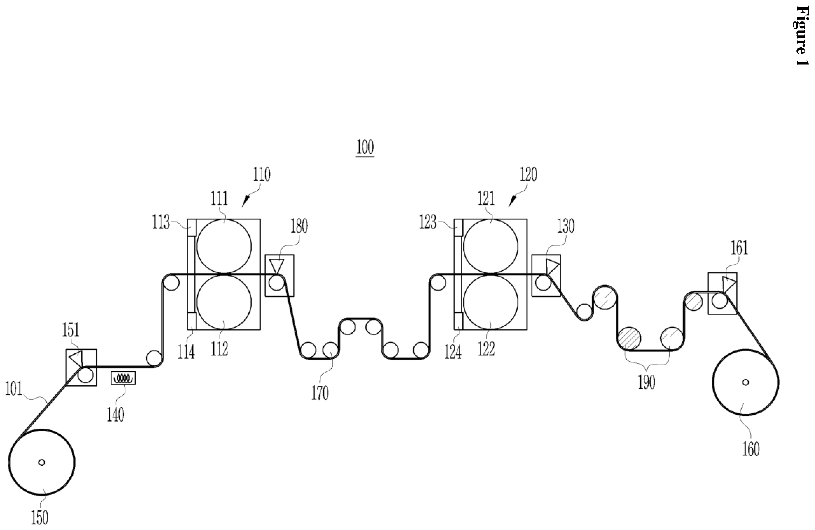

Figure 1 is a schematic diagram of a rolling apparatus used in an electrode sheet rolling process according to an embodiment of the present disclosure, and the electrode sheet rolling method will be described below in detail using the schematic diagram of the apparatus in Figure 1.

Referring to Figure 1, an electrode sheet 101 is primarily rolled by a pair of first rolling rolls 110 and then secondarily rolled by a pair of second rolling rolls 120, while being transported by transport rolls 170.

The rolling method, which is performed two or more times in this manner, is called tandem rolling. As described above, the tandem rolling causes a large difference in drawing rate between a coating portion where an active material layer is formed and a non-coating portion where an active material layer is not formed, leading to a high frequency of disconnection.

Thus, as a result of a variety of extensive and intensive studies, the present inventors have developed process parameters that can significantly reduce the occurrence frequency of disconnection without causing other defects in the electrodes, thus completing the present disclosure.

Here, although not shown in detail in the drawings, the electrode sheet 101 includes a coating portion in which an electrode active material slurry is coated on one surface or both surfaces of a current collector, and a non-coating portion in which the electrode active material slurry is not coated.

The current collector may be determined differently according to whether it is a positive electrode or a negative electrode, but generally has a thickness of 3 to 500 µm. Further, the current collector is not particularly limited as long as it has high conductivity without causing a chemical change in the battery, and for example, stainless steel, copper, aluminum, nickel, titanium, fired carbon, or copper, aluminum or stainless steel whose surface is treated with carbon, nickel, titanium, silver, or the like may be used. The current collector may have fine protrusions and depressions formed on a surface thereof to enhance adherence of an electrode active material, and may be used in various forms such as a film, a sheet, a foil, a net, a porous body, a foaming body, and a non-woven fabric structure.

In the electrode active material slurry, the type of active material is determined according to whether it is a positive electrode or a negative electrode. If the electrode sheet 101 is a positive electrode, the electrode active material slurry may include a positive electrode active material, a binder, a conductive material, other additives, and the like.

The positive electrode active material is, for example, a compound capable of reversible intercalation and deintercalation of lithium, and it may further include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5≤a≤+0.5, 0≤x≤0.5, 0≤b≤0.1), or the like.

The conductive material is a component for further improving the conductivity of the active material, and is not particularly limited as long as it has conductivity without causing a chemical change in the battery, and for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material includes conductive nanomaterials such as carbon nanotubes or carbon nanofibers, which can further lower the resistance of the secondary battery and further enhance output characteristics.

Typically, the conductive material may be included in an amount of 1 to 20 wt.%, or 1 to 15 wt.%, or 1 to 10 wt.% based on the total weight of the solid components contained in the electrode active material slurry.

The binder is a component that assists in the bonding between the active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluorine rubber or the like. Mixtures or copolymers of two or more selected from these may also be used.

Typically, the binder may be included in an amount of 1 to 20 wt.%, or 1 to 15 wt.%, or 1 to 10 wt.% based on the total weight of the solid components contained in the electrode active material slurry.

In addition, other additives may further include, for example, a filler or the like as a component for inhibiting the expansion. The filler is not particularly limited as long as it can inhibit the expansion of the electrode without causing a chemical change in the corresponding battery, and examples thereof may include olefinic polymers such as polyethylene and polypropylene; fibrous materials such as glass fibers and carbon fibers, and the like.

If the electrode sheet 101 is a negative electrode, the electrode active material slurry may include a binder, a conductive material, and other additives as described for the positive electrode, in addition to a negative electrode active material.

The negative electrode active material may include at least one carbon-based material selected from the group consisting of graphite, amorphous hard carbon, low-crystalline soft carbon, carbon black, acetylene black, Ketjen black, super P, graphene and fibrous carbon; Si-based materials; metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Group 1, 2, 3 elements in the periodic table, halogen; 0<x≤1; 1≤y≤3; 1≤z≤8); lithium metal; lithium alloys; silicon-based alloys; tin-based alloys; metal oxides such as SiO, SiO₂, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials; titanium oxide; lithium titanium oxide, or the like, but are not limited thereto as long as they are known in the art.

The electrode sheet 101 is first primarily rolled by a process in which the first rolling rolls 110, namely, an upper first rolling roll 111 located at an upper part and a lower first rolling roll 112 located at a lower part based on the electrode sheet 101, is rolled under specific conditions.

At this time, the primary rolling ratio performed by the primary rolling may satisfy the following condition 1, and the primary rolling ratio may be particularly 55% to 70%, and more particularly 60% to 65%.

### [Condition 1]

### First Rolling Ratio: 50% to 70%

Here, the rolling ratio refers to the ratio of the primary rolling load when the target rolling load is set as 100. For example, in the case where the target rolling load is 3.8 tons, when a rolling load of 3.0 tons is applied in the primary rolling, the primary rolling ratio is about 79%.

This rolling ratio most largely affects the disconnection of the electrode sheet 101. If the primary rolling is performed at a rolling ratio that falls outside the above range and is too low, the occurrence frequency of electrode disconnection increases abruptly after the rolling process of the electrode sheet 101 is completed. If the primary rolling is performed at a rolling ratio that is too high, it is similar to single rolling and thus causes electrode quality degradation issues such as an electrode swell for high density electrodes, which is not preferable.

After the electrode sheet 101 is primarily rolled at a rolling ratio within a specific range, the electrode sheet 101 is secondarily rolled by the second rolling rolls 120, namely, an upper second rolling roll 121 located on an upper part and a lower second rolling roll 122 located at a lower part based on the electrode sheet 101, so as to have a target thickness or density.

Here, the primary rolling and the secondary rolling are processes in which the electrode sheet 101 is rolled as a whole in the width direction, namely, the coating portion and non-coating portion of the electrode sheet 101 are rolled as a whole.

However, during this rolling, the non-coating portion is not rolled properly due to the thickness difference between the coating portion and the non-coating portion, namely, the thickness difference according to the thickness of the active material slurry applied.

Therefore, although not shown in the drawings, the method for rolling an electrode sheet according to the present disclosure may further comprise, in each of the primary rolling and secondary rolling, a primary non-coating portion rolling process in which only the non-coating portion is rolled after the primary rolling, and a secondary non-coating portion rolling process in which only the non-coating portion is rolled after the secondary rolling.

Thereby, it is possible to reduce the difference in drawing rate between the coating portion and the non-coating portion.

At this time, the pressures of the primary and secondary non-coating portion rolling may be respectively 1 kPa to 500 kPa, and more particularly, 150 kPa to 400 kPa.

Further, the pressure of the secondary non-coating portion rolling may be higher than that of the primary non-coating portion rolling.

If rolling is performed under a pressure that falls outside the above range and is too low, the effect due to non-coating portion rolling cannot be obtained, and if rolling is performed under a pressure that is too high, the drawing rate at the non-coating portion becomes too large, which is not preferable.

Meanwhile, after the secondary rolling is completed, the electrode sheet 101 is transported to a cooling roll 90 and cooled. The tension applied to the electrode sheet 101 while being transported to the cooling roll 190 after the secondary rolling is completed, is named as an outfeed tension.

At this time, after the rolling of the electrode sheet 101 is completed, the occurrence frequency of disconnection in the electrode sheet 101 is also affected by the outfeed tension.

Therefore, according to the present disclosure, the outfeed tension of the electrode sheet 101 measured after the secondary rolling may further satisfy the following condition 2 and it may be particularly 160 N to 270 N, and more particularly, 170 N to 250 N.

### [Condition 2]

### Outfeed Tension: 150 N to 300 N

The outfeed tension refers to the value obtained by measuring, by means of a load cell 130, the force applied to the electrode sheet 101 in the transport rolls 170 while being transported by the transport rolls 170 after secondary rolling.

Maintaining the outfeed tension to fall outside the above range and be lower than the above range is difficult when considering the transport speed of the electrode sheet 101, and the like, and if the outfeed tension is larger than the above range, the occurrence frequency of disconnection increases, which is not preferable.

Meanwhile, the rolling according to the present disclosure may also be performed by hot tandem rolling, so that heat may be applied to the electrode sheet 101 together with the rolling.

Here, the surface temperatures of the first rolling roll 110 and second rolling roll 120 that perform the primary rolling and the secondary rolling may be respectively 25°C to 90°C, particularly 60°C to 90°C, and more particularly 70°C to 90°C.

Here, the surface temperature may be measured by temperature detection sensors 113, 114, 123, 124 located adjacent to the upper and lower rolling rolls 111, 112, 121, 122 of the first rolling roll 110 and the second rolling roll 120.

The surface temperatures of the first rolling roll 110 and the second rolling roll 120 do not significantly affect the occurrence frequency of disconnection in the electrode sheet 101, but when rolling is performed within the above temperature range, particularly at 25°C, this means that no separate heat is applied. However, in cases where hot tandem rolling is performed by applying heat to raise the surface temperatures of the first rolling roll 110 and the second rolling roll 120, a linear pressure decreases, thereby exhibiting the effect of minimizing the impact on the electrode due to rolling, which is preferable.

In this case, when hot tandem rolling is performed to increase the surface temperatures of the first rolling roll 110 and the second rolling roll 120, although not shown in the drawings, a step of preheating the electrode sheet 101 by means of a preheating roll may be further performed immediately before performing each of the primary rolling and secondary rolling steps.

Here, preheating may be performed so that the surface temperature of the preheating roll is in the range of 30°C to 90°C, specifically 40°C to 80°C, which is equal to or lower than the surface temperatures of the first rolling roll 110 and the second rolling roll 120.

Meanwhile, a rolling method according to an embodiment of the present disclosure may further comprise an induction heating process of heating the current collector before the primary rolling.

This induction heating process refers to a process in which only the current collector portion is heated by means of an induction heating unit 140.

At this time, the induction heating temperature may also affect the occurrence of disconnection in the electrode sheet 101. Specifically, an appropriate induction heating temperature for reducing the occurrence frequency of disconnection may satisfy the following condition 3, and may be particularly 200°C to 280°C, and more particularly 200°C to 260°C.

### [Condition 3]

### Induction Heating Temperature: 150°C to 300°C

The induction heating temperature may be a value measured by a temperature detection sensor when the induction heating unit 140 generates heat.

If the induction heating temperature falls outside the above range and is too low, there is a problem that the non-coating portion drawing is not performed. If the induction heating temperature is too high, the tensile strength of the non-coating portion may decrease, and the quality of the electrode may be deteriorated, which is not preferable.

Meanwhile, the electrode sheet 101 is wound together with a roll and then provided from an unwinder 150 for performing the rolling, and then passes through the first rolling roll 110, the second rolling roll 120 and the cooling roll 190 via the transport rolls 170, and when the rolling is completed, the sheet is wound again by a rewinder 160.

Therefore, the electrode sheet 101 receives tension while being unwound from the unwinder 150 and transported to the first rolling roll 110. The tension that receives at this time is named as an unwinder tension, which tension may be measured by a load cell 151 located near the transport roll close to the unwinder 150, similarly to the outfeed tension.

The unwinder tension is not limited, but may be, for example, 140 N to 250 N, and particularly, 170 N to 230 N.

Further, even when the electrode sheet 101 passes through the first rolling roll 110 and is transported to the second rolling roll 120, the sheet receives tension while being transported by the transport rolls 170. This tension is named as a press tension, which tension may similarly be measured by a load cell 180 near the transport roller located between them.

The press tension is not limited, but may be, for example, 140 N to 250 N, and particularly, 170N to 230N.

If each of the unwinder tension and the press tension falls outside the above ranges and become too low, the electrode sheet 101 may be tightly adhered to the transport rolls 170 and not transported, which may cause slippage. If the tension is too high, the possibility of occurrence of disconnection increases, which is not preferable.

Finally, the electrode sheet 101 receives tension even when it is wound again by the rewinder 160 after rolling is completed. This tension is named as a rewinder tension, which tension can be measured by a load cell 161 near the feed roll immediately before being wound by the rewinder 160.

The rewinder tension is not limited, but may be, for example, 200 N to 320 N, and particularly 250 N to 300 N.

If the rewinder tension falls outside the above range and becomes too low, winding-out may occur. If the rewinder tension is too high, the possibility of occurrence of electrode sheet disconnection increases, which is not preferable.

In this way, tension is applied to the electrode sheet 101 section by section, and only when the appropriate tension is maintained as described above, rolling can be performed without deteriorating electrode quality. Here, the transport speed of the electrode sheet 101 not only affects the overall tension applied to the electrode sheet 101, but also may affect the rolling process so as to satisfy specific conditions. Therefore, it is preferable to have an appropriate transport speed.

Specifically, in the tandem rolling method according to the present disclosure, the transport speed for rolling the electrode sheet 101 may be, for example, 1 m/min to 120 m/min, and particularly, 5 m/min to 110 m/min.

Hereinafter, embodiments are disclosed to facilitate understanding of the present disclosure. The differences in disconnection occurrence frequency when the conditions of the present disclosure are satisfied and when they are not satisfied are described with reference to experimental examples. However, the following examples are for illustrative purposes only and are not intended to limit the scope of the present disclosure.

### <Experimental Example>

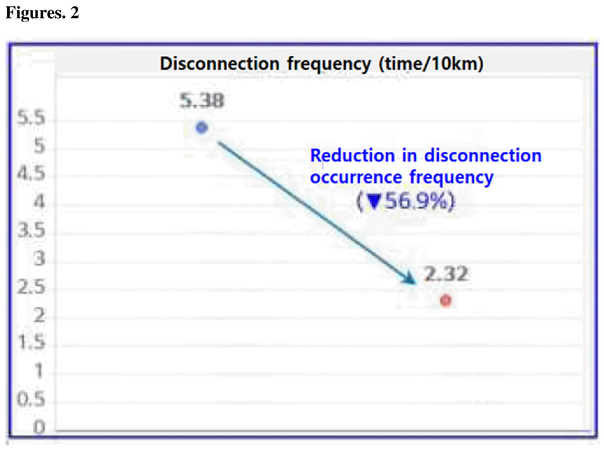

The occurrence frequency of disconnection was determined by varying the tandem rolling conditions as shown in Table 1 below., and the results are shown in Table 1 and in Figure 2.

**[Table 1]**

| Category | | Example 1 | Comparative Example 1 |
|---|---|---|---|
| Electrode Design | Composition of active material | LiNi_{0.865}Mn_{0.065}Co_{0.06}Al_{0.01}O₂ (large particle/single particle=5:5(wt%)) | LiNi_{0.865}Mn_{0.065}Co_{0.06}Al_{0.01}O₂ (large particle/single particle=5:5(wt%)) |
| | Rolling loading | 460mg/25cm² | 460mg/25cm² |
| | Primary rolling thickness | 127.5 | 136 |
| | Secondary rolling thickness | 125.5 | 125.5 |
| | Rolling ratio (first: second) | 60:40 | 30:70 |
| | Loading reduction rate (after coating vs. after rolling) | 1.38% | 1.51% |
| Process conditio n | Induction heating temperature | 250°C | 250°C |
| | Primary non-coating portion press pressure | 300kpa | 300kpa |
| | Secondary non-coating portion press pressure | 320kpa | 320kpa |
| | U/W tension | 200N | 200N |
| | O/F tension | 240N | 240N |
| | Press tension | 230N | 230N |
| | R/W tension | 300N | 300N |
| Disconnection frequency [times/10km] | | 2.32 (▼56.9%) | 5.38 |
| Disconnection frequency [times /LOT] | | 0.56 | 1.39 |

Referring to Table 1 and Figure 2, it may be confirmed that when the rolling ratio is set higher than a conventional case, the occurrence frequency of disconnection is reduced by 50% or more.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: electrode sheet rolling apparatus
110: first rolling roll
120: second rolling roll
130: outfeed tension measuring load cell
140: induction heating unit
150: unwinder
160: rewinder
170: transport roll
180: press tension measuring load cell
190: cooling roll

### [Industrial Applicability]

According to the present disclosure, when process conditions are adjusted to satisfy specific conditions in the rolling process of an electrode sheet, it exhibits the effect of dramatically improving disconnection during rolling without deteriorating the electrode quality.

## Claims

1. A method for rolling an electrode sheet, comprising a coating portion in which an electrode active material slurry is coated on one surface or both surfaces of a current collector and a non-coating portion in which an electrode active material slurry is not coated,
wherein the electrode sheet is primarily rolled by a pair of first rolling rolls,
wherein the primary pressed electrode sheet is secondarily rolled again by a pair of second rolling rolls, thereby performing tandem rolling, and
wherein the following condition 1 is satisfied when performing the tandem rolling:
[Condition 1]
Primary Rolling Ratio: 50% to 70%

2. The method for rolling an electrode sheet according to claim 1,
wherein the primary rolling ratio of the condition 1 is 60% to 65%.

3. The method for rolling an electrode sheet according to claim 1,
wherein the outfeed tension measured after the secondary rolling further satisfies the following condition 2:
[Condition 2]
Outfeed Tension: 150 N to 300 N

4. The method for rolling an electrode sheet according to claim 3,
wherein the outfeed tension of the condition 2 is 170N to 250N.

5. The method for rolling an electrode sheet according to claim 1,
further comprising an induction heating process of heating the current collector prior to the primary rolling, wherein the induction heating process satisfies the following condition 3:
[Condition 3]
Induction Heating Temperature: 150°C to 300°C

6. The method for rolling an electrode sheet according to claim 5,
wherein the induction heating temperature of the condition 3 is 200°C to 260°C.

7. The method for rolling an electrode sheet according to claim 1,
wherein surface temperatures of the first rolling roll and the second rolling roll are respectively 25°C to 90°C.

8. The method for rolling an electrode sheet according to claim 7,
wherein the surface temperatures of the first rolling roll and the second rolling roll are respectively 70°C to 90°C.

9. The method for rolling an electrode sheet according to claim 1,
wherein the method for rolling an electrode sheet further comprises a primary non-coating portion rolling process in which only the non-coating portion is rolled after the primary rolling, and a secondary non-coating portion rolling process in which only the non-coating portion is rolled after the secondary rolling, and
the pressures of the primary and secondary non-coating portion rolling are respectively 1 kPa to 500 kPa.

10. The method for rolling an electrode sheet according to claim 9,
wherein the pressures of the primary and secondary non-coating portion rolling are respectively 150 kPa to 400 kPa.

11. The method for rolling an electrode sheet according to claim 1,
wherein the transport speed for rolling the electrode sheet is 1 m/min to 120 m/min.
